Europäisches Patentamt

**(19)** European Patent Office

Office européen des brevets

**(11)** Publication number : **0 402 440 B1**

**(12)** # EUROPEAN PATENT SPECIFICATION

**(45)** Date of publication of patent specification : 07.06.95 Bulletin 95/23

**(51)** Int. Cl.<sup>6</sup> : **G01B 21/20**

**(21)** Application number : **90900298.2**

**(22)** Date of filing : **16.12.89**

**(86)** International application number : **PCT/GB89/01504**

**(87)** International publication number : **WO 90/07097 28.06.90 Gazette 90/15**

**(54) METHOD OF AND APPARATUS FOR SCANNING THE SURFACE OF A WORKPIECE.**

**(30)** Priority : **19.12.88 PCT/GB88/01135
19.04.89 GB 8908854**

**(43)** Date of publication of application : **19.12.90 Bulletin 90/51**

**(45)** Publication of the grant of the patent : **07.06.95 Bulletin 95/23**

**(84)** Designated Contracting States : **CH DE FR GB IT LI SE**

**(56)** References cited :
**WO-A-88/02843
WO-A-89/05960
DE-A- 3 309 122
GB-A- 2 167 559
GB-A- 2 203 837
US-A- 3 824 893
US-A- 4 611 403**

**(73)** Proprietor : **Renishaw plc
New Mills
Wotton-Under-Edge Gloucestershire GL12
8JR (GB)**

**(72)** Inventor : **McMURTRY, David, Roberts 20
Tabernacle Road
Wotton-Under-Edge
Gloucestershire GL12 7EF (GB)**
Inventor : **HENNING, Brian, Cecil, Robert 5
Pittville Close
Thornbury
Avon BS12 7SB (GB)**

**(74)** Representative : **Waite, John et al
Renishaw plc
Patent Department
New Mills
Wotton-under-Edge Gloucestershire GL12 8JR
(GB)**

EP 0 402 440 B1

## Description

The present invention relates to a method of and apparatus for scanning the surface of a workpiece.

A method of scanning is known, for example from US Patent No. 3,824,893, in which a mechanical probe is fixed on a machine spindle and the machine spindle traverses the surface of the workpiece either in straight lines in one of the x, or y directions, or in a curved path in the x, y plane, and after each line is completed the machine spindle moves the probe to a new position displaced from the completed line and repeats the movement along a parallel line.

This method is relatively slow since the whole machine is being moved backwards and forwards to build up the scanned area of the surface. Also the accelerations and decelerations of the machine introduce inaccuracies into the measurements due to bending of the machine parts during the accelerations and decelerations.

It is also known from International Publication No. WO89/05960, published on 29 June 1989, to mount a stylus on a head of a measuring machine, the head including shafts rotatable about two orthogonal axes whereby the stylus can be positioned angularly about the two axes, while the head can be positioned by the machine in any position within the operating field of the machine to scan the surface of a workpiece. The shafts are driven by motors which are also adapted to be constant torque motors, and can be operated selectively in position mode or constant torque mode. By this means the stylus can be oriented by operating the motors in position mode to bring a sensing element on the tip of the stylus into contact with a workpiece surface, and then by switching one, or both of the motors to constant torque mode the stylus tip can be held in contact with the surface while the machine moves the stylus around the workpiece.

This head provides a machine with greater scanning flexibility in that the head can orient the stylus in many different directions for scanning workpieces with multiply angled surfaces without the stylus losing contact with the surface. The scanning method still relies on the movement of the stylus over the workpiece being caused by the machine.

There is a need in the measuring field for a machine and an associated scanning apparatus which enables high speed continuous scanning of an area of a surface, with cheap interchangeable probes of different types.

According to the present invention there is provided a method of scanning a surface of a workpiece using a surface-detecting device mounted on a support on a coordinate positioning machine, the support including drive means for producing movement of the surface-detecting device with two degrees of freedom relative to the support, the method comprising the steps of:

operating the machine to produce relative movement between the support and the workpiece surface along a path adjacent to the workpiece surface whereby the surface-detecting device passes over the workpiece surface, and characterised by the further steps of:

operating the drive means

i) to produce movement of the surface-detecting device relative to the support in a first direction towards or away from the workpiece surface and into a predetermined spatial relationship therewith, and

ii) to produce, simultaneously with the relative movement between the support and the workpiece surface, relative oscillating movement between the surface-detecting device and the surface in a second direction transverse to the instantaneous path direction while maintaining said predetermined spatial relationship between the surface-detecting device and the workpiece surface.

Preferably the method further comprises the steps of:

determining the positions of the support at a plurality of locations within the reference framework relative to a datum position;

determining the instantaneous positions of the surface-detecting device relative to the support when the support is at each of said locations; and

using the results of said determinations to determine the positions relative to said reference framework of a plurality of points on the surface being scanned.

The support may be a scanning head and the co-ordinate positioning machine may be a measuring machine or a machine tool.

The method may be carried out manually or automatically under the control of a computer.

The pre-determined spatial relationship between the surface-detecting device and the surface being scanned is to be understood as follows. In relation to a surface-detecting device in the form of a non-contacting probe, e.g. an optical probe, a relationship in which the probe is at a distance from the surface which is within the operating range of the probe. In relation to a surface-detecting device in the form of a work-contacting stylus alone, or mechanical probe including a work-contacting stylus, e.g. an analogue probe, a relationship in which the stylus is in contact with the surface being scanned. Where a trigger probe is used the relationship is one in which the stylus is brought into contact with the surface at a plurality of discrete points thereon.

The relative movement between the support and the surface may be produced by moving the workpiece, the support or both.

The transverse movement may be an oscillating pivoting movement or an oscillating translating movement.

By means of the invention the machine can be operated in the manner which is most effective for the particular scanning operation being undertaken while the motorised scanning head, the inertia of which is low relative to that of the machine, produces the scanning action of the surface-detecting device. For example, the machine may be moved at a relatively high but constant velocity along a line over the surface of the workpiece while simultaneously operating the motorised head to oscillate the surface-detecting device transversely to the direction of movement of the machine.

This method will enable more rapid scanning to be carried out while eliminating errors from the machine which occur in conventional scanning operations due to inertia loads on the machine parts as the machine accelerates during changes of direction.

As an alternative method of operation, the machine may be moved over the surface of the workpiece relatively slowly at a non-constant velocity while the motorised scanning head causes the surface-detecting device to traverse the surface to take measurements at points on the surface. In this method the errors due to the accelerations of the machine can be reduced while gathering data rapidly using high speed operation of the head which has much lower inertia loads.

Conventional machines will have transducers from which the instantaneous position of the head in a three-dimensional co-ordinate framework may be determined relative to a datum position. The motorised scanning head also preferably has transducers from which the instantaneous position of the surface-detecting device relative to the head may be determined. By collecting data from the transducers on the head and on the machine the positions relative to the reference framework of a plurality of points on the surface being scanned may be determined.

The head may be operable to produce pivoting or translational oscillatory movements of the surface-detecting device transverse to the direction of motion of the machine spindle in two orthogonal directions whereby the surface sensing device may be made to follow a spiral, helical or other form of circular motion. Such operation enables the internal surfaces of bores or the external surfaces of circular discs to be scanned using the apparatus and method of the invention, and provides signals indicative of the co-ordinates of a plurality of points on such surfaces relative to a datum position in the reference co-ordinate framework.

According to another specific aspect of the present invention there is provided a method of scanning a cylindrical surface in or on a workpiece and having a longitudinal axis, the method comprising the steps of mounting a surface-detecting device on a motorised head, mounting the head on a spindle of a machine, driving the head by means of the machine spindle along a line having at least a component of direction parallel to said longitudinal axis, and simultaneously operating the head to cause the surface-detecting device to be oscillated transversely to said longitudinal axis in two orthogonal directions to be brought into a pre-determined relationship with the surface at successive spaced apart points thereon.

When carrying out the method of the invention in accordance with any one of the above-described embodiments in an automated manner, the movements of the support and the head are preferably made under the control of a computer. Such a computer may also control, or comprise of itself, data gathering means and the means for determining from the gathered data the required information about the surface being scanned.

The surface-detecting device may be a mechanical probe, for example, a touch trigger probe or an analogue probe, including a stylus, a stylus alone, or a non-contacting probe, for example, an optical probe. Each will require different types of controls and will produce a variety of measurement signals for the data collection device to read. For example, the signals required for accurately determining the position of a probe stylus in a co-ordinate framework may be provided partly from the machine scales, partly from the head, and partly from the probe itself depending on the type of probe used.

The mechanical probe may be an analogue probe for example as described in our US Patent No. 4,158,919 or our International Application No PCT/GB89/01197, or a touch trigger probe (for example as described in our UK patent No. 1,445,977). Where an analogue probe is used the stylus may be urged into contact with the surface being scanned continuously throughout the scanning operation and the control means will instruct the data gathering means to read the signals generated by the probe indicative of the position of the stylus relative to the probe in addition to reading the signals produced by the transducers in the head, and the machine scales.

Where a touch trigger probe is used the stylus may be repeatedly withdrawn from and urged back into contact with the workpiece surface at pre-selected time or spacial intervals, whereby the probe sends a signal to the data gathering device to read the machine scales and the transducers in the head every time contact is made with the workpiece surface.

Where an optical probe is used the surface detection is provided by a beam of light which is directed onto the surface and the position of the surface is determined either by a triangulation technique or a focus detection method. In either case the probe outputs signals which must be read in conjunction with the position sensing transducers in the head and the machine scales at the same pre-selected time or spacial intervals.

A potential source of errors from the method of scanning according to the invention is that the transverse movement of the surface-detecting device may be applied to the machine spindle from the motorised head during the scanning operation. If the rigidity of the machine is not particularly high, such movement may produce vibrations in the machine and thus reduce the accuracy of the information produced.

According to another aspect of the present invention a scanning head for use with a machine in scanning the surface of a workpiece comprises:

means defining at least one axis,

a surface-detecting device mounted on the head,

drive means for producing movement of the surface-detecting device relative to said at least one axis, and characterised by:

at least one mass carried by the head and which is driven by the drive means in a manner such as to oppose the reaction forces produced in the head as a result of said movement of the surface-detecting device to reduce the effects of said reaction forces on the machine.

The drive means in the head are preferably electric motors of the type which produce a constant torque for a given input current.

Where the drive means produce oscillating pivoting movement of the surface-detecting device the mass within the head may be rotationally accelerated to produce a torque reaction which is equal and opposite to the torque reaction produced by the moving parts of the drive means.

Where the drive means is an electric motor, those normally static parts of the motor which react the torque produced by the motor may be mounted for rotation to balance the torque reaction of the motor so that substantially no reaction forces are transmitted to the machine.

The head preferably includes air bearings for substantially frictionless operation. This not only increases the speed at which the head can operate but minimises the frictional forces to be overcome in operating the apparatus and hence the forces which may be transmitted back to the machine spindle.

The head can however, be made to operate with other types of bearings, but where friction in the bearings is significant the stylus may bend under the combined effects of the torque from the motor and friction in the bearings. This bending will create errors in the measurements of the surface if not allowed for. In this case, when using a mechanical stylus as the, or part of the, surface-detecting device it may be advantageous to include strain gauges to determine the bending of the stylus so that this information can be used to correct the measurements of the surface.

Examples of apparatus and methods of operation thereof according to this invention will now be described with reference to the accompanying drawings wherein:-

Fig 1 is an elevation of a co-ordinate measuring machine including scanning apparatus according to the present invention.

Fig 2 is a section on the line II-II in Fig 1 and shows in diagrammatic form details of the stylus mounting.

Fig 3 is a part plan view of Fig 1 showing a typical scanning operation.

Fig 4 is a diagram of the overall operating system of the machine shown in Fig 1.

Fig 5 is a detail of Fig 4 and shows diagrammatically the motors and transducers in the head.

Fig 6 is a sectional elevation through part of a scanning head of the present invention illustrating in more detail a mechanism for balancing the reaction forces in one of the motors.

Fig 7 illustrates a further scanning operation according to the invention.

Fig 8 is a plan view of Fig 7.

Fig 9 is a prespective view of the mounting apparatus in Fig 2; in a bore.

Fig 10 is a diagram of a scanning operation according to an embodiment of the present invention.

Fig 11 is a graph showing the inputs to the motors M1 and M2 for the scanning operation shown in Fig 10.

Fig 12 is a diagram of a scanning operation according to a second embodiment of the present invention; and

Figs 13 and 14 are mathematical representations of two co-ordinate systems used in employing the present invention.

Fig 15 is a diagrammatic representation of a further scanning operation with a mechanical stylus in which strain gauges are used on the stylus to determine stylus bending.

Fig 16 shows a control system for the scanning operation of Fig 15.

Figs 17 and 18 show diagrammatic representations from different angles of a further scanning operation in which touch trigger probe is used, and

Fig 19 illustrates the manner in which data is collected from points on a workpiece using the scanning method of the present invention.

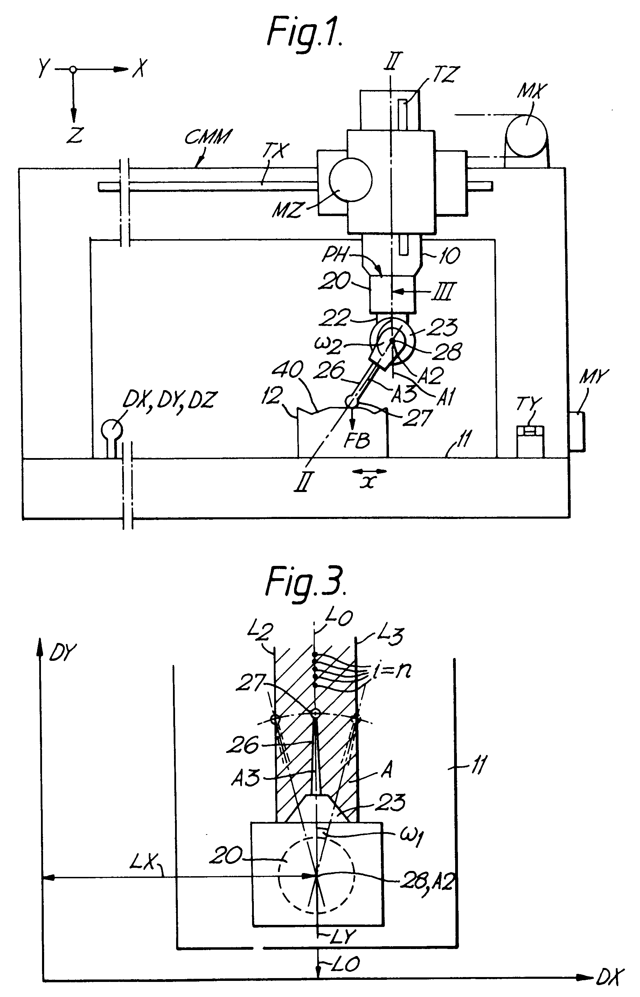

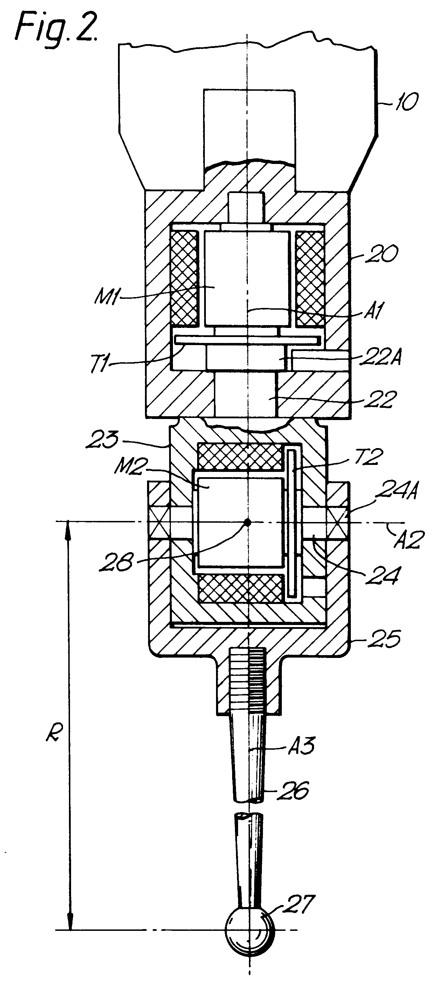

Referring to Figs 1 to 3, a co-ordinate measuring machine CMM comprises an operating member 10 supported on a table 11 for translatory movement in the three orthogonal directions X,Y,Z of a cartesian co-ordinate system. The member 10 is drivable in the directions X,Y,Z by respective motors MX,MY,MZ in a manner known per se relative to the table 11 on which a workpiece 12 is mounted. The operating member 10 has secured thereto a motorised scanning head PH comprising a fixed part formed by a base or housing 20 supporting a movable part in the form of a shaft 22 rotatable by a motor M1 relative to the housing 20 about an axis A1. The shaft 22 is secured to a further housing 23 supporting a shaft 24 rotatable by a motor M2 relative to the housing 23 about an axis A2 perpendicular to the axis A1. Housing 23 and shaft 24 can be regarded as the fixed and movable parts of the lower point of the head. The shafts 22,24 are supported for rotation in respective bearings 22A,24A in the respective housing 20,23. The bearings 22A and 24A are preferably air bearings (known per se) which utilise a supply of air (not shown) provided by the machine. The shaft 24 has secured thereto a frame 25 to which is secured a surface detecting device in the form of a stylus 26 having an axis A3 perpendicular to the axis A2. The stylus 26 has a free end defined by a spherical sensing element, or surface contacting tip, 27, and a supported end defined essentially by the axis A2. The axes A1,A2,A3 preferably have a common point of intersection 28, and in this particular example axis A1 is aligned with the Z axis of the machine, while the axis A2 is aligned with the Y axis of the machine. The head PH thus constitutes a support on which the stylus is mounted.

The arrangement is such that the motors M1,M2 can position the sensing element or tip 27 angularly about the axes A1 or A2, and the motors MX,MY,MZ can position the head PH or, more specifically, the point 28 linearly anywhere within the three-dimensional co-ordinate framework defined by the operating field of the machine CMM to bring the surface detecting device into a pre-determined relationship with the surface being scanned. Linear position transducers TX,TY,TZ (known per se) are provided for measuring linear displacement LX,LY,LZ of the member 10 in the respective directions X,Y,Z as is well known. Angular position transducers T1,T2 are provided for measuring angular displacements W1,W2, of the stylus 26 about the respective axes A1,A2, i.e. relative to the member 10. The motors MX,MY,MZ,M1,M2 are also collectively referred to by the letter M, and the transducers are collectively referred to by the letter T.

The transducers T thus provide data for determining the position of the support PH within the reference framework and for determining the instantaneous position of the surface detecting device 26 relative to the support.

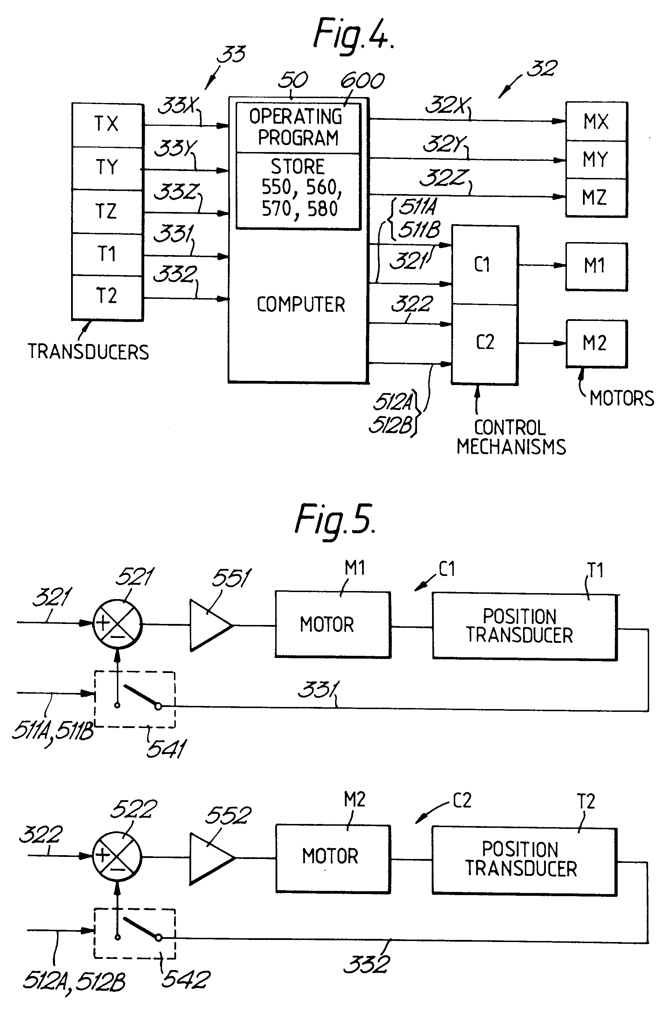

A control means, for example, computer 50 (Fig 4) is programmed to output drive signals 32X, 32Y, 32Z, 321, 322, collectively denoted 32 for driving the respective motors M thereby to position the stylus 27 relative to the workpiece 12, position feedback signals 33X, 33Y, 33Z, 331, 332, collectively denoted 33, being provided from the respective transducers T. The computer 50 thus also acts as a data gathering means.

The motors M1 and M2 are adapted to be constant torque devices and are operable to move their respective rotors to a given angular position, and hold the rotors in that position, or to apply to their rotors a substantially constant torque for a given input current.

Thus the motors M1,M2 are operable in two modes, viz the positioning mode and the constant torque or bias mode.

For the scanning operation shown in Fig 3 in which an external surface of the workpiece is to be scanned generally in the x,y plane, the machine drives the head to move along a straight path or line LO. During the movement of the head the motor M2 is operated in the bias mode and the motor M1 is operated in the positioning mode. Thus motor M2 applies a given torque to the stylus 26 resulting in a force FB between the tip 27 and the workpiece 12, while motor M1 drives the frame 25 transversely to the instantaneous path direction LO to position the element 27 in a plurality of locations on the workpice surface between the limits L2 and L3. Thus the stylus covers an area A of the surface. In order to cover the complete surface, the scanning operation must be repeated a sufficient number of times over different areas.

During the scanning operation, if there is relative movmement between the head PH and the workpiece 12 in the sense of reducing the force FB, and, instantaneously the torque FBx on the stylus, the motor M2 moves the stylus 27 to maintain the torque and increases the angle W2. If the device PH is moved in the sense of increasing the force FB, the motor M2 accommodates that movement by adjusting the angle W2 to maintain the torque. In other words, the stylus is pivotal about the axis A2 both in response to and in opposition to the bias torque of the motor M2. Clearly if the stylus were to move relative to the head PH due to collision with a feature on the surface of the workpiece, or some other obstruction the motor M1 will accommodate the movement providing a degree of crash protection for the stylus.

In some scanning operations, i.e. surface form scanning, where it is necessary for the stylus to follow the surface contours accurately the torque required to be applied to the stylus may be sufficient to cause bending of the stylus. By using air bearings in the head however there will be minimal resistance to the pivoting motion of the stylus in reaction to the changing of the force FB as the contours of the surface change. Thus there is no significant bending of the stylus due to bearing friction when air bearings are used and the errors in the position measurement of the surface due to stylus bending can be calibrated and allowed for or may be reduced to second order importance and may be neglected. If other bearings are used in which friction is significant it may be necessary to take account of stylus bending errors on the measurement using stain gauges on the stylus as described in relation to other embodiments below.

Referring to Fig 5, the computer 50 is arranged to control the motors M1,M2 which are DC motors, through respective control systems C1,C2 to which the drive signals 321,322 are connected as demand signals and wherein the feedback signals 331,332 are connectable to the signals 321,322 through summing junctions 521,522. This connection of the feedback signals 331,332 is effected through respective mode control switches 541,542. The computer 50 generates respective mode control signals 511A,511B and 512A, 512B for operating the respective switches 541,542. The arrangement is such that if either of the signals 511A,512A is output, the respective switch 541,542 is closed and the respective motor M1,M2 is operated in the positioning mode, but if either of the signals 511B,512B is output the respective switch 541,542 is opened whereby the respective motor M1,M2 is deprived of the position feedback signal 321,322 and therfore operates in the bias mode. The systems C1,C2 have preset gain amplifiers 551,552 for the feed forward signal so as to limit the torque of the motors to a preset value.

In order to control the scanning operation a computer programmer has to set up certain initial data which is passed to a data gathering means which in this example is the computer memory.

From prior knowledge of the general size, shape and position of the workpiece 12 within the cartesian co-ordinate framework of the machine, the computer programmer determines initial data 550 including but not limited to the following:

i) the line L0 in the x,y plane along which the machine will drive the head 20 over the workpiece,

ii) the desired initial force FB between the stylus element 27 and the workpiece 12 and the desired torque of the motor,

iii) the height Zi above the general workpiece plane at which the head 20 must be driven in order that the motor M2 can maintain the desired torque constant within a reasonable range of angles W2,

iv) the width of the area A over which the motor M1 will sweep the stylus element 27 in order to gather the required data,

v) the best mode of machine operation for the most effective scanning of the particular surface i.e. constant velocity or slow non-constant velocity.

The determination of the initial data for a line such as the path L0 is well known per se. Also known is the organisation of a machine such as the machine CMM for driving an operating member through such a line. Therefore, these aspects are not specifically described other than saying that, in the present example, the data 550 comprise the orthogonal positions of the point 28 relative to a datum DX,DY,DZ at given spatial intervals between points i=o and i=n (Fig 3) on the desired line. Further, the programmer determines position data 560 being values for the signals 321,322 whereby the stylus 26 is moved into a neutral position in which it is clear of the workpiece 12 even when the member 10 is at its starting position i=o for the scanning operation. This ensures that the member 10 can be moved into the starting position i=o withoug danger of collision between the stylus and the workpice. Next, the programmer determines position data 570 being values for the signals 321,322 whereby the stylus 26 is moved into a starting condition for the scanning operation, that is, the condition in which the sensing element 27 can engage the workpiece. The data 560,570 include the signals 511A,511B and 512A,512B as will become apparent later herein. The programmer also determines the radius R of the stylus and the diameter of the stylus ball 27. The data 550,560,570 and R are transferred into the computer store in the usual way.

Regarding the execution of the scanning operation, the point 28 is assumed, initially, to have a position in which the member 10 is well clear of the workpiece. For the operation itself the computer contains a program 600 written to perform the following operations:-

The scanning head is driven to the starting point of the scanning operation i=o on line LO at height Zi.

With motor M1 set to the positioning mode and motor M2 set to the bias mode, motor M2 is operated to bring the stylus ball 27 into contact with the surface of the workpiece 12 with the required initial force which sets the datum torque for the motor M2.

Drive the motors MX, MY, MZ to move the head PH along line L0 while simultaneously driving motor M1 to oscillate the stylus to either side of line LO between the limits L1 and L2.

At positions i=1 to i=n read the outputs of the transducers T and calculate the instantaneous values of the X,Y and Z co-ordinates of the ball at each position of the machine sending the values to the memory store.

It is to be noted in this example that the computer 50 performs the funtions both of controlling the scanning operation and data gathering.

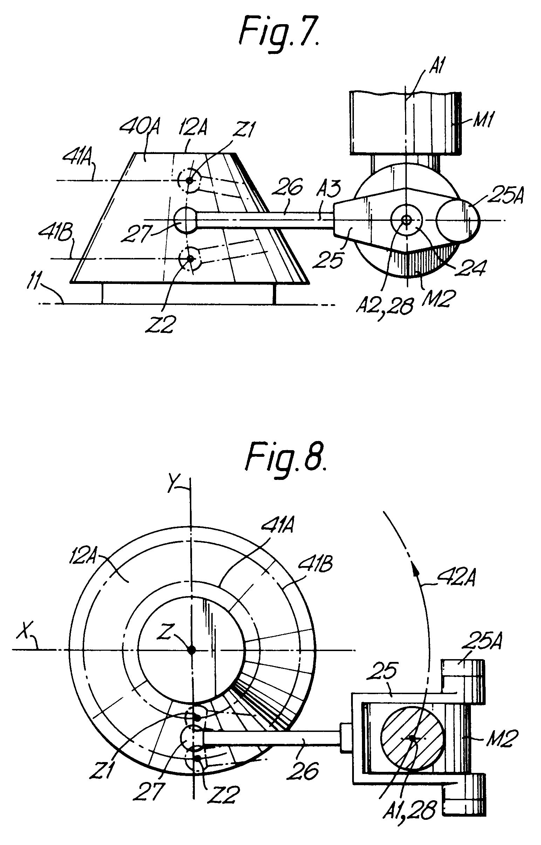

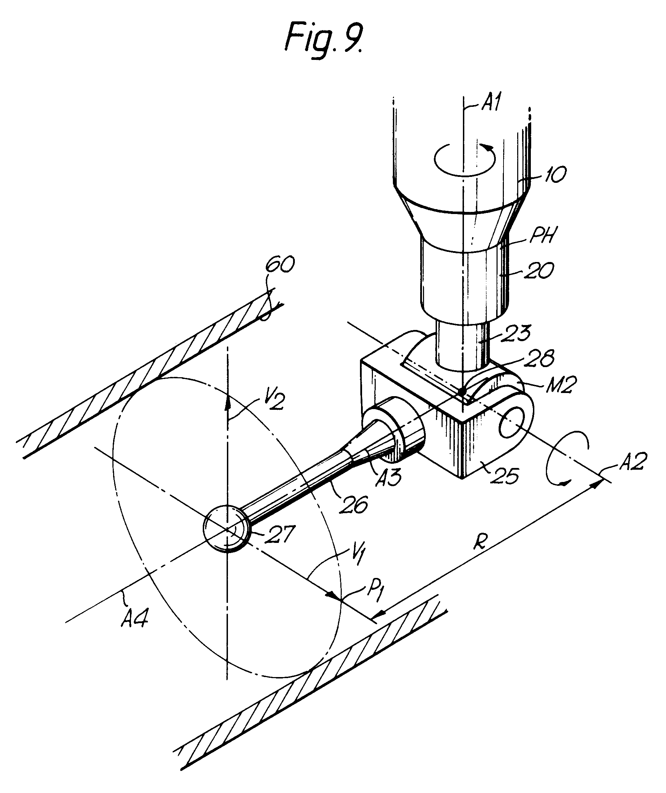

The velocity of the machine movement is preferably constant to avoid the errors caused by accelerations and decelerations of the machine. For generally planar surfaces this can give rapid and accurate data gathering. Alternatively where the shape of the surface so dictates it may be necessary to drive the machine along a path such that it is not possible to maintain a constant velocity (see Figs 8 and 9 below).

The computer may determine the frequency at which the transducers T are read on a time basis as an alternative to a spatial basis.

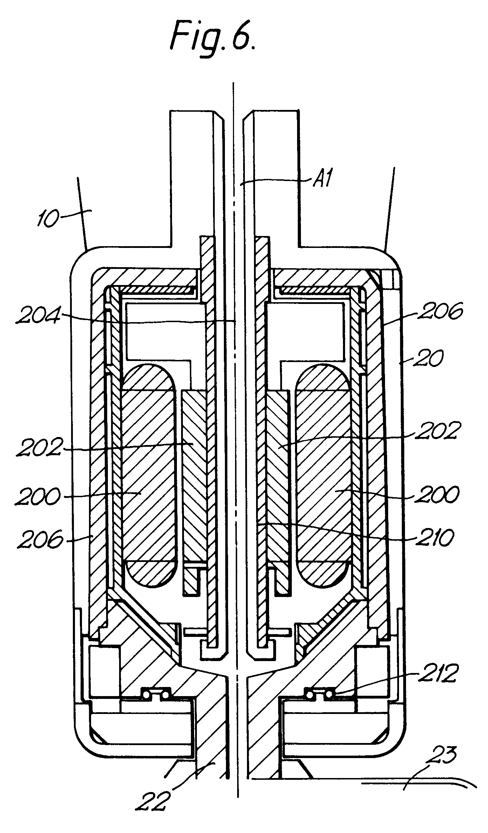

The oscillating movement of the surface detecting device could, in some circumstances, cause vibrations to be transmitted to the machine spindle. Fig 6 illustrates a modification to the head shown in Fig 3 to overcome this problem. Where applicable the same reference numerals as used in Fig 3 are used to refer to the same or similar parts in Fig 6.

Only the top part 20 of the head is shown in Fig 6, it being understood that the bottom part 24 should be modified in exactly the same way.

Referring now to Fig 6, the housing 20 is attached to the quill 10 of the machine. Motor M1 has two contra rotating parts 200 and 202 respectively. Power from the machine is fed by cables through a central duct 204 to part 200 which is rotatable about axis A1, on the air bearing 206, which includes a thrust flange 208, supported in the housing 20. Part 200 carries the housing 23 containing motor M2 by means of shaft 22. Air for the air bearing is fed through duct 204 and onto the bearing surfaces through appropriate drillings (not shown).

The other part 202 of the motor (which would normally be held static) is mounted on a further bearing 210 so that when the motor is operated to rotate the part 200, the reaction through the motor windings will rotate the part 202 in the opposite direction. By this means normally no reaction forces would be transmitted to the motor housing and no vibrations would be transmitted to the quill when the motor M1 is used to oscillate the housing 23.

However, because motor M1 is a constant torque motor, the bearing 210 is arranged to provide some friction to provide resistance to the rotation of the part 202 when the motor is operated in the bias mode, to prevent part 202 from overspeeding in reaction to the constant torque on part 200. Thus some minimal vibration may be passed to the machine due to this friction when the motor M1 is oscillating in the positioning mode.

The head includes a further bearing 212 for shaft 22. Transducer T1 is present in the form of encoder disc and read head. The remaining features of this embodiment of the head are not described in detail.

It is to be understood that motor M2 is similarly formed in two contra rotating parts in order to minimise vibrations transmitted to the machine when it is operated in the positioning mode.

Other workpiece surfaces may be scanned with the apparatus of the present invention. For example (see Figs 7 and 8) the surface 40A of a cone may be scanned by mounting it on the table 11 with its axis vertical, i.e. parallel to the Z direction. The motors M of the machine may be arranged to drive the stylus 26 past the surface 40A in, say the X direction at constant velocity, while the motor M1 operates in the bias mode to urge the stylus into contact with the surface and the motor M2 acts in the positioning mode to cause oscillation of the stylus in the Z direction between positions Z1 and Z2. In this way a small patch of the surface may be scanned at a time between planes 41A and 41B.

Alternatively (see Fig 8) the motors MX and MY are driven to move the point 28 through a circular path 42A while motor M1 operates in the bias mode and motor M2 operates in the positioning mode. By this means the tip 27 can be maintained in contact with the surface at planes 41A,41B while the scanning head PH is driven completely around the surface of the workpiece. While such operation is not conducted at constant velocity because of the circular path of the head, the motors MX and MY should be controlled by the computer 50 to minimise the inertia forces on the machine, e.g. by driving the head around the path 42 at constant speed.

The computer is programmed by the programmer to ensure that the readings of the transduces T are fed to the data gathering means i.e. the computer memory, at regular intervals preferably, as in the embodiment described in Fig 3 at spacial intervals i = o to i = n around the path 42A.

The stylus 26 is preferably balanced by a balance mass 25A secured to the stylus holder 25 thereby to reduce the power requirement to the motor M2. Clearly other forms of mass balancing may however be used.

In a further modification of the invention the constant torque may be applied to the stylus 26 by a spring instead of a constant torque motor.

The simple control system described above which arranges for a bias force to be applied to the surface detecting device in a direction normal to local surface plane, and a positioning force to be applied to the surface detecting device at right angles to the bias force, is satisfactory for surfaces where significant areas can be arranged to lie in a plane.

If however, the surface lies at an angle to both motor axes, the motors may both have to be operated in both the bias mode and the positioning mode simultaneously. Hence the control system will operate to supply current to both motors to achieve both a substantially constant stylus pressure normal to the workpiece surface and translation of the surface detection device across the workpiece surface.

It is also to be understood that a non-contacting probe, for example, an optical probe may be substituted for the stylus 26. in this case there will be no need for motor M2 to operate in the bias mode and it may be locked in position, or operated in positioning mode to provide complex motions of the head.

Also the stylus may be substituted by a mechanical probe, for example, an analogue probe or touch trigger probe to provide more detailed information of the surface. The outputs of the probes will then need to be read in addition to those of the machine and head thus giving rise to more complex data analysis requirements.

In all of the scanning operations decribed above and heeinafter, the computer is programmed to use the data collected from the various transducers during the operation, and to use it in conjunction with the initial data fed in by the programmer,to determine the co-ordinates of points on the surface of the workpiece in the reference framework relative to the datum point.

Figs 9 to 19 illustrate a method of bore scanning using the present invention.

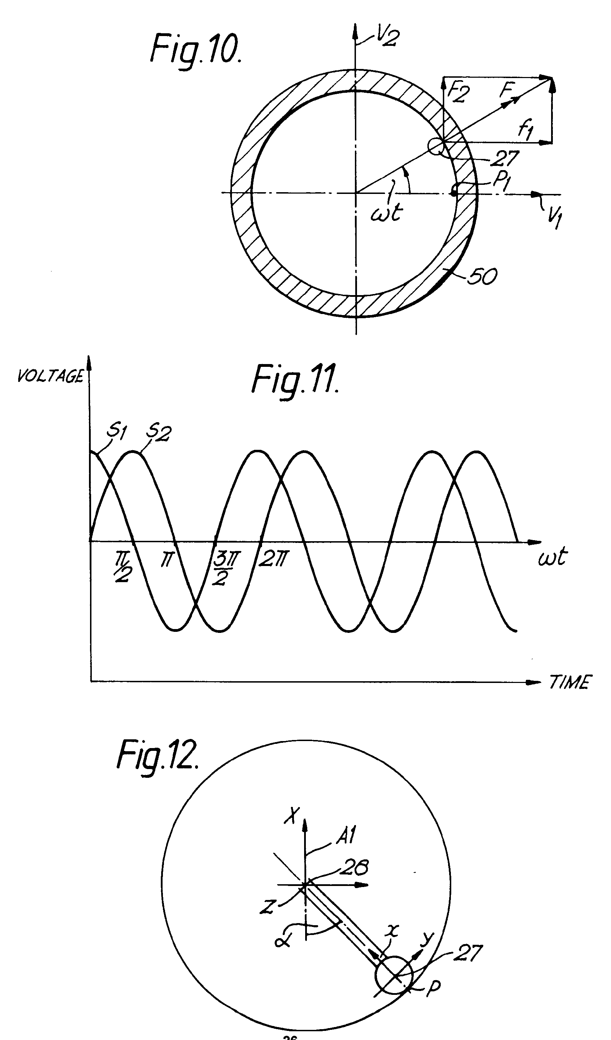

Referring to Figs 9 to 11 the probe head PH is positioned so that point 28 lies on the axis A4 of cylindrical bore 60 and axes A1,A2 and A4 are orthogonal (this can be seen most clearly in Fig 9). For the sake of simplicity, such a relationship between the axes A1,A2 and A4 will be assumed to exist in all examples relating to bore scanning unless stated otherwise. The stylus is then moved in the direction of vector V1 into contact with the surface of the bore 60 at position P1. Currents S1,S2 (Fig 11) are then applied to motors M1,M2 respectively and the appropriate motors of the machine are started to drive the probe head in the direction of the axis A4 at a constant velocity. At the instant the currents S1,S2 are applied, the current S1 is a maximum whereas the current S2 is zero. This means that the torque produced by motor M1 is a maximum and that motor M2 produces no torque at all. Thus, at this instant the stylus is urged against the surface of the bore in the direction of vector V1. As current S2 increases, the torque from motor M2 (in a direction parallel to vector V2) increases while torque from motor M1 decreases, and the stylus 26 will move relative to the surface of the bore 60 while remaining in contact with the surface. As the stylus 26 moves round toward the position represented by the angle $\omega t=90°$ (Fig 10) the force F1 acting parallel to vector V1 will decrease and the force F2 acting parallel to vector V2 will increase in accordance with the decrease and increase in the current S1 and S2 respectively. At the position represented by $\omega t=90°$, F1 has decreased to zero and F2 is a maximum, acting along the direction of vector V2. it can be seen from Fig 11 that the current S1 becomes negative after $\omega t=90°$. Thus when $\omega t>90°$ (and of course $\omega t<270°$) the motors M1 will apply torque in the reverse direction (anti-parallel to vector V1) and the force F will act in the reverse direction. Another change of direction occurs in respect of force F1 at $\omega t=270°$; force F2 changes direction at $\omega t=0°$ and 180°. Thus, by driving motor M1 with a current which varies as a cosine wave, and motor M2 with a current which varies as a sine wave, the stylus can be driven around the circumference of the bore 60 without losing contact with the surface. Since the head is also moving along the bore during the scanning operation the stylus will travel with a helical motion over the bore surface to gather data about the surface along the length of the bore.

It should be noted that although the magnitudes of the applied forces F1,F2 vary sinusoidally, the resultant applied force F has a constant magnitude, and always acts radially. This is desirable because the stylus will inevitably deform when it is urged against the surface of the bore, and therefore the position transducers T1,T2 will output angular displacement data W1, W2 which represents an angular displacement slightly larger than the actual displacement of stylus ball 27 from axis A4. This error can be calibrated out of the system, by measuring the bending of the stylus 26 for a given force. However if the force varies either in magnitude or direction during scanning then the stylus bending will also vary and the error due to the stylus bending cannot be calibrated out of the system.

The stylus will also deform tangentially to the surface of the bore 60, due to friction between the stylus ball 27 and the surface of the bore 60. However, provided the tangential deformation can be kept constant this deformation is not as serious as the deformation due to the radial force F, since the component of deformation in a radial direction due to the tangential deformation is small. One way of overcoming any problems due to tangential deformation is to mount the stylus ball 27 on bearings so that it rolls around the surface of the bore. (Another method of dealing with tangential deformation is described subsequently).

Another method of scanning the bore using a stylus as a surface detection device is to scan at a constant angular velocity, this may be performed with a position control servo mechanism. Because, during scanning at a constant angular velocity the force on the stylus may vary, means may be provided on the stylus, for example, a strain gauge array (not shown) to detect the bending of the stylus. The strain gauge array would typically comprise three strain gauges arranged so as to detect strain in three orthogonal directions; usually axial stylus strain is ignored because it is small.

The basic principle of constant velocity scanning is that the stylus is driven around the surface of the bore at a constant angular velocity by the position control servo, while the strain gauge indicates the stylus deflection (i.e. bending) at any instant in time. A correction to the position of the stylus as indicated by the transducers T at any given instant in time can thus be made in accordance with the value of strain gauge output at that instant. This operation may be carried out after a scanning operation has been completed, by referring back to the strain gauge deflection data recorded during the operation, or in real time.

The simplest example of bore scanning at a constant angular velocity is as follows. Motor M1 is positioned with its axis Al coincident with the bore axis A4. A constant current (generating a constant torque) is supplied to motor M2 to drive the stylus 26 into contact with the bore surface, and motor M1 is then driven through a 360° rotation by a position control servo. The transducer and machine outputs are read in the normal way. It should be understood that this is an illustrative example, and that in practice, it is unlikely that the axes A1 and A4 can be brought into coincidence. Thus generally, the position control servo will have to control both M1 and M2 in an appropriate manner having regard to the relative orientation of the probe head PH and the bore 60.

The correction of the stylus position using the strain gauge deflection data (required when the force on the stylus varies during a scanning operation) will now be described with reference to Figs 12, 13 and 14. Referring first now to Fig 12, the stylus is inclined at an angle $\alpha$ to the axis A1 and has a displacement in the reference frame of the probe head PH denoted by the co-ordinates x,y,z. These values can be obtained using known transformations from polar co-ordinates to rectangular co-ordinates. However, due to stylus bending there is a displacement of the stylus ball 27 $\delta x$, $\delta y$, $\delta z$ from the position given by the output of the transducers T1 and T2. The degree of the deflection of the stylus can be calculated from the output of the strain gauges on the stylus. However, this output is an output in the reference frame of the stylus tip. Thus, a transformation of the stylus co-ordinate system into the probe head co-ordinate system is required. This then yields deflection of the stylus ball 27 (i.e. the stylus bending) in the reference frame of the probe head, and the values $\delta x$, $\delta y$, and $\delta z$ may be summed with the co-ordinates x,y and z to obtain the true position of the stylus ball. The transformation is carried out as follows:

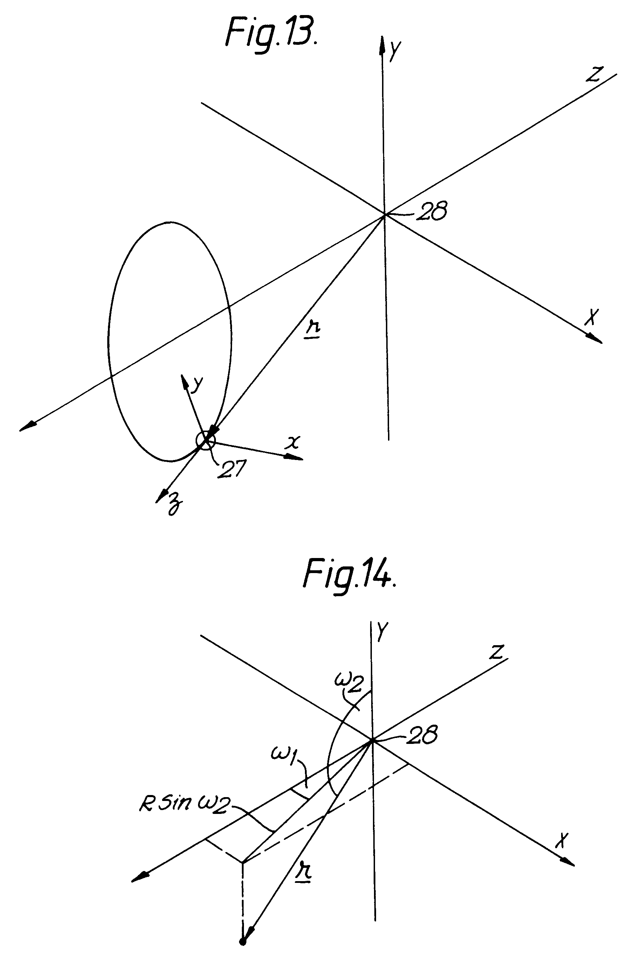

Referring to Figs 13 and 14, the reference frame of the probe head PH is defined by axes **X,Y,Z** and the co-ordinates of the stylus ball 27 in the reference frame of the probe head are expressed in terms of axes x,y and z. Because of the geometry involved however, it is more convenient to use spherical polar co-ordinates $(R,W_1,W_2)$. Where:

R is the length of the stylus from intersection point 28,
$W_1$ is the angle of displacement of the stylus normal to the **Y,Z** plane
$W_2$ is the angle of displacement of the stylus from the **Y** axis

$$x = R \sin W_2 \sin W_1$$
$$y = R \cos W_2$$
$$z = R \sin W_2 \cos W_1$$

For the purposes of the transformation we define unit vectors $\underline{i}$, $\underline{j}$ and $\underline{k}$ which point in the direction of the **X,Y** and **Z** axes respectively, and unit vectors $\underline{l}$, $\underline{m}$ and $\underline{n}$ which point in the directions of axes x,y and z respectively.

To transform the x,y and z co-ordinates of the stylus into the **X,Y,Z** reference frame it is necessary to express $\underline{l}$, $\underline{m}$ and $\underline{n}$ in terms of $\underline{i}$, $\underline{j}$ and $\underline{k}$.

An example of such a transformation is the expression of $\underline{n}$ in terms of $\underline{i}$, $\underline{j}$ and $\underline{k}$:
$\underline{n}$ points in the same direction as position vector $\underline{r}$ which defines the position of the stylus ball 27.

$$\therefore \underline{n} = \frac{\underline{r}}{|\underline{r}|} = \frac{\underline{r}}{R}$$
$$\underline{r} = R [\sin W_2 \sin W_1 \, \underline{i} + \cos W_2 \, \underline{j} + \sin W_2 \cos W_1 \, \underline{k}]$$
$$\therefore \underline{n} = \sin W_2 \sin W_1 \, \underline{i} + \cos W_2 \, \underline{j} + \sin W_2 \cos W_1 \, \underline{k}.$$

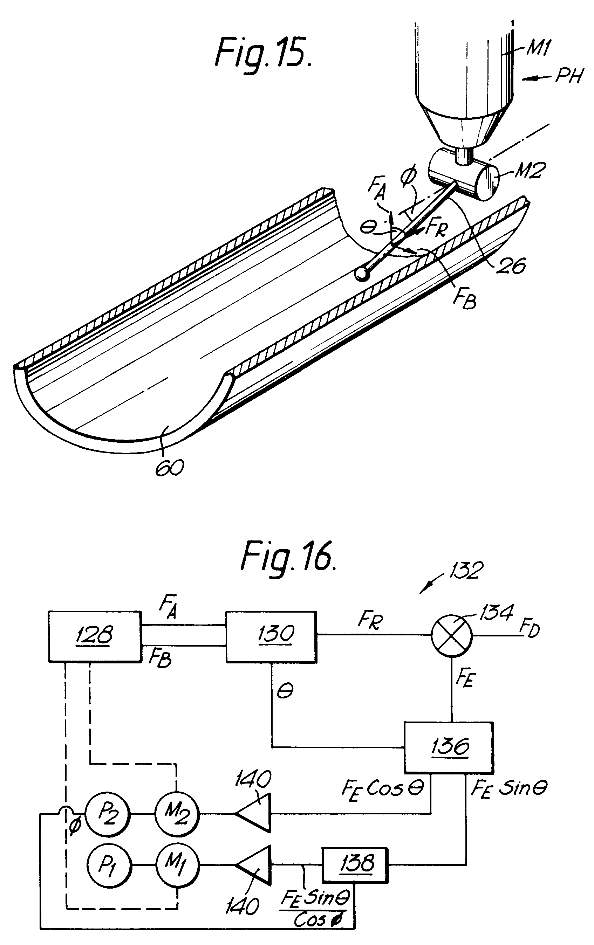

Although the magnitude of the torque applied to the stylus by the motors M1 and M2 can be kept at a substantially constant value, the forces acting on the stylus by virtue of its contact with the workpiece surface may vary. This is because the resultant force on the stylus due to its contact with the surface of the workpiece is a function of both the torque applied to the stylus, and the frictional resistance to movement of the stylus across the surface of the workpiece. In order to keep the forces acting on the stylus as constant as possible, it may be desirable to vary the torque applied to the stylus by the motors M1 and M2 in such a way as to keep the stylus bending (as sensed by the strain gauge array) at a constant value throughout the scanning operation. A method of scanning which controls the probe head in this way will now be described with reference to Figs 15 and 16. Although illustrated as a method of bore scanning, this particular method is applicable to all types of scanning.

Fig 15 shows a perspective view of a bore scanning operation, in which, for the purposes of illustration, the top half of the bore has not been shown. As with both previous scanning operations, the probe head PH is positioned so that point 28 lies on the axis of the bore 60, and the motors M1 and M2 are driven so as to bring the stylus 26 into contact with the surface of the bore 60. A force $F_D$ is determined as the desired resultant force on the stylus. The torque applied to the stylus by each of the motors M1 and M2, which will move the stylus around the surface of the bore, and will cause a force $F_D$ to act on the stylus, is estimated, and the currents fed to the motors are then varied so as to generate this torque.

The strain gauge array represented schematically by reference numeral 128 (Fig 16) outputs data corresponding to the magnitude of the two perpendicular components of the actual resultant force $F_R$ acting on the stylus. The first of the two components $F_A$ acts orthogonal to the axis of the stylus while the second, $F_B$ acts mutually orthogonal to the axis of the stylus, and the component $F_A$. The values of $F_A$ and $F_B$ are fed to a transformation circuit 130 of the control system 132, which calculates the magnitude of the resultant force $F_R$ and also the angle $\Theta$ between $F_A$ and $F_R$. The magnitude of the resultant force $F_R$ is compared with the magnitude of the desired force $F_D$ at a summing junction 134 which, in accordance with the summation, outputs a value $F_E$ corresponding to the difference between the magnitudes of $F_R$ and $F_D$. Resolving circuit 136 resolves the error signal $F_E$ into two perpendicular components, $F_E \cos\Theta$ and $F_E \sin\Theta$. Because the perpendicular distance from the axis A1 to the stylus ball 27 varies as a function of the angle $\phi$ subtended by the stylus 26 at the axis A4, the error signal sent to the motor M1 must also be a function of $\phi$, since the torque applied to the stylus 26 by the motor M1 varies as a function of the perpendicular distance between the stylus ball 27 and the axis A1. The circuit 138 compensates for this by generating a signal $F_E$ sin$\Theta$ / cos$\Theta$ (the value of $\phi$ is obtained from the position of motor M1). Both error signals are amplified by amplifiers 140, and fed to motors M1 and M2 to correct the torque applied to the stylus. The new torque applied to the stylus acts as a mechanical feedback to the strain gauge array.

An analogue probe may be provided instead of a stylus, and as with all scanning operations in general the three methods of bore scanning described above may equally be applied to scanning with an analogue probe. The major difference between using an analogue probe, and just a stylus, is that when using a probe the deflection of the stylus with respect to the probe is summed in addition to the two transducers outputs $T_1$ and $T_2$, and the output of the strain gauge array on the stylus. Preferably an analogue probe requiring only light stylus forces to produce the required deflections is used so that stylus bending is minimal and the strain gauge array on the stylus can be removed to avoid further complicating the data gathering process.

As an alternative to collecting data by continuous contact of a stylus, or analogue probe with a workpice, data may be collected by investigating the workpiece at a discrete number of points. Using the probe head PH it is possible to collect data at a discrete number of points by mounting a touch trigger probe to the probe head. A suitable probe is described in WO86/03829.

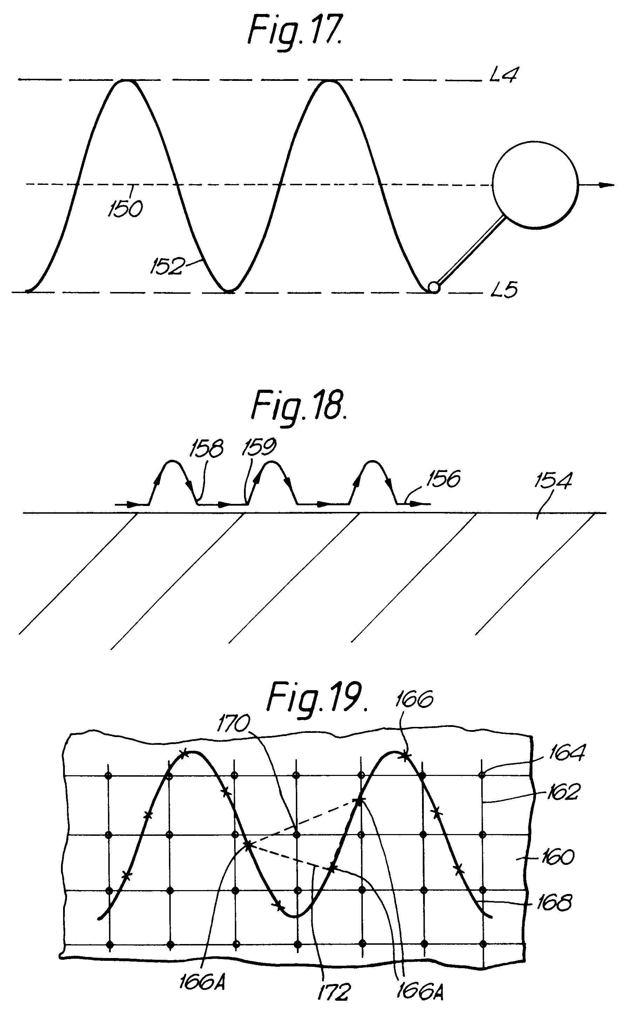

A method of data collection using this arrangement will be described with reference to Figs 17 and 18. The motor M1 is positioned with its axis substantially perpendicular to the surface of the workpiece, at a height which enables the stylus to be brought into contact with the surface of the workpiece by rotation of motor M2. The motor M1 is driven with sinusoidal signal so that the stylus of the touch trigger probe oscillates with simple harmonic motion between the two chosen extremities of rotation of motor M1 which define the locii L4 and L5.

Typically, the machine to which the probe head is connected will be driven along a path 150 at constant velocity, and so in plan view, as shown in Fig 17 the stylus will describe a raster scanning path 152. The motor M2 is also driven with a sinusoidal signal, however the driving signal for motor M2 has a frequency greater than the driving frequency of motor M1. Thus for each complete cycle of motion of motor M1, the motor M2 will complete e.g. five complete cycles. The result of the combined motions of motors M1 and M2 is that the stylus of the touch trigger probe comes into contact with the surface of the workpiece 154 at a discrete number of points along the scanning path 152 illustrated in Fig 17. The motion of the stylus ball as viewed along the path 150 and perpendicular to the axis A1 is shown in Fig 18. It can be seen from this figure that the motion of the stylus ball can be described as a chopped sine wave 156.

N.B. The path illustrated in this figure illustrates only the transverse stylus ball motion close to the path 150 of the probe head, where the acceleration transverse to the path 150 is small and so the chopped sine waves have a roughly constant wavelength. Closer to the extremities of the scanning path, the wavelength of the chopped sine waves will be smaller since the transverse speed of the stylus is maller.

The data collected using a touch trigger probe with this scanning method varies according to the type of touch trigger probe used. For example, data may be collected at the points where the stylus comes into contact with the workpiece, or additionally, where the stylus loses contact with the workpiece.

A combined touch trigger and analogue probe such as is disclosed for example in our International Publication No WO 89/05435 may be used to scan in accordance with this method, and when using this probe the collected data may fall into three categories:

1. The position of the points of first contact between the stylus of the probe and the workpiece surface indicated by reference numeral 158 in Fig 18.

2. The position of the points at which the stylus of the probe loses contact with the workpiece surface indicated by reference numeral 159 in Fig 18.

3. "Analogue data" providing information on the profile of the workpiece surface inbetween the points 158 and 159.

The data points described in 2 above can be ascertained by providing a strain gauge array on the stylus of the touch trigger probe, and detecting the point at which the output of the strain gauge drops below a pre-determined level which corresponds to substantially no forces acting on the end of the stylus. It will be appreciated that the three different categories of data mentioned above have varying degrees of accuracy and therefore may be used for differing purposes.

The data collection methods will obviously vary depending on the scanning method and operation used. For scanning where e.g. a stylus is in contact with a workpiece throughout a scanning operation, the machine outputs, the transducer outputs of the probe head, and any strain gauge outputs are simultaneously recorded at predetermined time intervals (these outputs may alternatively, if desired, be selected at predetermined spatial intervals). This yields a series of discrete data points along the scanning path. Data collected using a touch trigger probe operated according to the method described above will inevitably be a discrete series of points collected at regular intervals.

The data collected is used to determine the position in space relative to a datum, of points on a data grid (which is a mathematical representation of the workpiece surface) contained in a computer. The points on the data grid cannot be measured directly; i.e. measurements cannot be made at points on the workpiece surface which correspond exactly to the points on the mathematical representation of that surface. This is because of constraints on inspection time and also (and more fundamentally) because of the physical constraints which limit the ability of a machine to attain, within the limits of measurement accuracy, a given position (known as the tunelling performance of the machine).

The determination of the position in space of points on a data grid will now be described with reference to Fig 19. Fig 19 shows a workpiece 160, and superimposed on the surface of the workpiece, a data grid 162. The intersection points 164 of the grid 162 are the points at which, for the purposes of expedient calculation and computer modelling it is desired to determine the position in space, relative to a datum, of the workpiece surface. For simplicity the data grid is defined as lying in the X-Y plane, and so the X and Y co-ordinates of the points 164 are known. The object is thus to determine the Z co-ordinate of each of the points 164.

By virtue of a scanning operation the workpiece surface is measured at points 166 spaced at regular intervals along a raster scanning path 168. To determine the Z co-ordinates of e.g. a grid point 170, a triangle 172 is constructed, whose vertices are three measured points 166A adjacent the grid point 170 to be determined. The plane defined by the three measured points is assumed to represent, within the perimeter of triangle 172 the local workpiece surface. The Z co-ordinate of the plane at the X,Y co-ordinates of grid point 170 is therefore assumed to be the Z co-ordinates of the workpiece surface.

It can be seen therefore that the dimensions of the raster scanning path are determined by the size of the triangle which can be regarded as representing a planar workpiece.

The above described embodiments of the invention have disclosed the operation of the motors as constant torque motors in which a given current supplied to the motor will produce a given torque. However due to variations in magnetic flux density,or imperfect commutation, the torque generated by an electric motor may not be entirely dependent on the current applied but may also vary with the relative angular positon of the rotor and stator.

In order to improve the control of the motor torque in the scanning head of the preent invention, the values of torque against current may be measured and plotted and an "error map" produced which can be added to the initial information supplied to the computer so that either the current can be controlled to produce a desired torque, or the actual torque can be determined from knowledge of the current.

Such a modification could avoid the need to measure stylus bending with strain gauge arrays and enable the stylus bending to be determined directly within the required degree of accuracy.

The invention has been particulary decribed above with reference to a scanning head which provides pivoting action of the surface detection device about one or more axes.

However, analogue probes are known for example from the specification of US Patent No 3,869,799 and from the specification our co-pending International Application No PCT/GB89/01197 in which translational movements of a stylus are produced relative to orthogonal axes. The probe described in US Patent No 3,869,799 includes motors for actuating such movement.

It is therefore within the scope of the present invention that a scanning head is constructed in accordance with the disclosure of either of these above-referenced specifications and motors are added to drive the stylus of the probe in the two orthogonal directions with enough movement to enable scanning to take place. The normal transducers within the probe would provide the scanning data when used in this way.

Such a scanning head could be used for example on surfaces inclined to the orthogonal axes of the head to avoid the complex control functions required of the constant torque motors, or for scanning external cylindrical surfaces with a cranked stylus.

It is to be understood that the different features of the invention as described above, are not necessarily limited to their association with the embodiments in connection with which they were first described. Many aspects of the invention are generally applicable to other embodiments of the invention described herein.

## Claims

1. A method of scanning a surface of a workpiece using a surface-detecting device (26) mounted on a support (PH) on a coordinate positioning machine (CMM), the support including drive means (M1,M2) for producing movement of the surface-detecting device with two degrees of freedom relative to the support, the method comprising the steps of:

operating the machine (CMM) to produce relative movement between the support (PH) and the workpiece surface along a path (LO,42A) adjacent to the workpiece surface whereby the surface-detecting device (26) passes over the workpiece surface, and characterised by the further steps of:

operating the drive means (M1,M2)

i) to produce movement of the surface-detecting device (26) relative to the support (PH) in a first direction towards or away from the workpiece surface and into a predetermined spatial relationship therewith, and

ii) to produce, simultaneously with the relative movement between the support and the workpiece surface, relative oscillating movement between the surface-detecting device and the surface in a second direction transverse to the instantaneous path direction (LO,42A) while maintaining said predetermined spatial relationship between the surface-detecting device and the workpiece surface.

2. A method as claimed in claim 1 and further comprising the steps of:

determining the positions of the support (PH) at a plurality of locations (iN) relative to a datum position (Dx,Dy,Dz);

determining the instantaneous positions of the surface-detecting device (26) relative to the support (PH) when the support is at each of said locations (iN); and

using the results of said determinations to determine the positions relative to said datum position of a plurality of points on the surface being scanned.

3. A method as claimed in claim 1 or claim 2 characterised in that said relative movement between the surface to be scanned and the support takes place at constant velocity.

4. A method as claimed in any one of claims 1 to 3 characterised in that the relative movements between the surface-detecting device (26) and the surface in both of said first and second directions are oscillating movements.

5. A method as claimed in claim 4 characterised in that the surface to be scanned is a cylindrical surface (60) in or on the workpiece and which has a longitudinal axis (A4), and the path has at least a component of direction parallel to said longitudinal axis (A4).

6. A method as claimed in any one of claims 1 to 5 characterised in that the support is a scanning head (PH) having at least one axis (A2) and the transverse movements of the surface-detecting device relative to the surface are oscillating pivoting movements about said at least one axis of the head.

7. A method as claimed in any one of claims 1 to 5 characterised in that the support is a scanning head (PH) having at least one axis and the transverse movements of the surface-detecting device (26) relative to the surface are oscillating translating movements relative to said at least one axis of the head.

8. A method as claimed in any one of claims 1 to 7 characterised in that the surface-detecting device is a stylus (26) having a surface-contacting tip (27), and the pre-determined relationship thereof with the surface is a relationship in which the surface-contacting tip (27) is in contact with the surface.

9. A method as claimed in any one of claims 1 to 7 characterised in that the surface-detecting device is an analogue probe having a stylus (26) with a surface-contacting tip (27), and the predetermined relationship thereof with the surface is a relationship in which the surface-contacting tip is in contact with the surface.

10. A method as claimed in any of claims 1 to 7 characterised in that the surface-detecting device is a touch trigger probe having a stylus (26) with a surface-contacting tip (27) and the pre-determined relationship thereof with the surface is a relationship in which the surface-contacting tip is brought into contact with the surface at a plurality of discrete points thereon.

11. A method as claimed in claim 9 as dependent on claim 2 characterised in that the probe has transducers whereby the position of the stylus relative to the probe may be determined, the method comprising the further steps of:

determining from the transducers of the analogue probe the position of the stylus relative to the probe at each of one of said plurality of locations, and,

using the results of such determination in determining the positions of points on the surface in said co-ordinate framework relative to said datum position.

12. A method as claimed in claim 8 as dependent on claim 2 or claim 11 characterised in that the stylus carries transducers whereby any deformation of the stylus due to contact with the surface may be determined, the method further comprising the steps of:

determining from the transducers on the stylus the amount by which the stylus is deformed, and,

using the results of such determination in determining the positions of points on the surface in said coordinate framework relative to said datum position.

13. A method as claimed in any one of claims 1 to 7 characterised in that the surface-detecting device is a non-contact probe and the pre-determined relationship thereof with the surface is a relationship in which the probe is positioned at a pre-determined distance from the surface.

14. A method as claimed in claim 13 characterised in that the probe is an optical probe.

15. A scanning head (PH) for use with a machine (CMM) in scanning the surface of a workpiece (12) comprising:
means defining at least one axis (A1,A2),
a surface-detecting device (26) mounted on the head (PH),
drive means (M1,M2) for producing movement of the surface-detecting device (26) relative to said at least one axis (A1,A2), and characterised by:
at least one mass (202) carried by the head and which is driven by the drive means in a manner such as to oppose the reaction forces produced in the head as a result of said movement of the surface-detecting device to reduce the effects of said reaction forces on the machine.

16. A scanning head according to claim 15 characterised in that the drive means (M1,M2) include air bearings.

17. A scanning head according to claim 15 or claim 16 characterised in that the head (PH) has means defining two orthogonal axes (A1,A2) relative to which the surface-detecting device (26) is movable.

18. A scanning head according to any one of claims 15 to 17 characterised in that each axis (A1,A2) of the head (PH) relative to which the surface-detecting device is movable is a pivoting axis.

19. A scanning head according to any one of claims 15 to 18 characterised in that the head includes position-determining transducers (T1,T2) for determining the position of the surface-detecting device (26) relative to each axis of the head.

20. A scanning head according to any one of claims 15 to 19 characterised in that each of the drive means is an electrical motor (M1,M2).

21. A scanning head according to any one of claims 15 to 20 characterised in that the surface-detecting device is a stylus (26) having a surface-contacting tip (27).

22. A scanning head according to any one of claims 15 to 20 characterised in that the surface-detecting device is a touch trigger probe including a stylus (26) having a surface-contacting tip (27).

23. A scanning head according to any one of claims 15 to 20 characterised in that the surface-detecting device is an analogue probe including a stylus having a surface-contacting tip, and including position sensing transducers for determining the instantaneous position of the stylus relative to the probe body.

24. A scanning head according to any one of claims 15 to 20 characterised in that the surface-detecting device is a non-contact probe.

25. A scanning head according to claim 21 or claim 23 characterised in that the stylus (26) carries transducers whereby any deformation of the stylus due to contact with the surface may be determined.

26. A scanning head as claimed in claim 18 characterised in that the mass (202) carried by the head is rotationally accelerated to produce an equal and opposite reaction to said forces.

27. A scanning head as claimed in claim 26 characterised in that at least one of the drive means (M1,M2) in the head is an electric motor, the parts (200,202) of which are mounted for relative rotation in opposite directions.

28. Apparatus for scanning the surface of a workpiece characterised by a machine (CMM) supporting a scanning head (PH) according to any one of claims 15 to 27 for movement in a three-dimensional co-ordinate framework and wherein the machine includes position-determining transducers (Tx,Ty,Tz) for determining the instantaneous position of the head within said framework, the apparatus further comprising control means (50) for establishing a predetermined relationship between the surface-detecting device (26) and the surface being scanned.

29. Apparatus as claimed in claim 28 and further characterised by data gathering means (50) controlled by the control means (50) for gathering position data from the position-determining transducers on the machine.

30. Apparatus according to claim 29 as dependent on claim 19 characterised in that the data gathering means (50) additionally receives position data from the position-determining transducers (T1,T2) in the head.

**31.** Apparatus according to claim 29 as dependent on claim 23 characterised in that the data gathering means (50) additionally receives position data from the position-determining transducers in the probe.

**32.** Apparatus according to claim 29 as dependent on claim 25 characterised in that the data gathering means additionally receives data from the transducers carried by the stylus (26).

**33.** Apparatus according to claim 28 as dependent on claim 20 characterised in that the electric motors (M1,M2) are operable either in a positioning mode or a constant torque mode and control means (50) are provided to selectively switch the motors between the different modes of operation.

**Patentansprüche**

**1.** Ein Verfahren zum Abtasten einer Oberfläche eines Arbeitsstücks unter Verwendung einer Oberflächennachweisvorrichtung (26), die auf einer Halterung (PH) auf einer Koordinatenpositionierungsmaschine (CMM) angebracht ist, wobei die Halterung Antriebsmittel (M1, M2) zur Erzeugung einer Bewegung der Oberflächennachweisvorrichtung mit zwei Freiheitsgraden relativ zu der Halterung umfaßt, und das Verfahren die Schritte umfaßt, daß die Maschine (CMM) betrieben wird, um eine relative Bewegung zwischen der Halterung (PH) und der Arbeitsstückoberfläche entlang eines Weges (LO, 42A) benachbart der Arbeitsstückoberfläche zu erzeugen, wodurch sich die Oberflächennachweisvorrichtung (26) über die Arbeitsstückoberfläche bewegt, und **gekennzeichnet** ist durch die weiteren Schritte, daß die Antriebsmittel (M1, M2) betrieben werden,

    i) um eine Bewegung der Oberflächennachweisvorrichtung (26) relativ zu der Halterung (PH) in einer ersten Richtung auf die Arbeitsstückoberfläche zu oder von dieser weg und in eine vorbestimmte räumliche Beziehung zu dieser zu bewegen, und
    ii) um gleichzeitig mit der relativen Bewegung zwischen der Halterung und der Arbeitsstückoberfläche eine relative oszillierende Bewegung zwischen der Oberflächennachweisvorrichtung und der Oberfläche in einer zweiten Richtung transversal zu der momentanen Wegrichtung (LO, 42A) zu erzeugen und dabei die vorbestimmte räumliche Beziehung zwischen der Oberflächennachweisvorrichtung und der Arbeitsstückoberfläche aufrechtzuerhalten.

**2.** Ein Verfahren wie in Anspruch 1 beansprucht, welches ferner die Schritte umfaßt, daß die Positionen der Halterung (PH) an einer Vielzahl von Stellen (iN) relativ zu einer Bezugsposition (Dx, Dy, Dz) bestimmt werden, daß die momentanen Positionen der Oberflächennachweisvorrichtung (26) relativ zu der Halterung (PH) bestimmt werden, wenn sich die Halterung an jeder der Stellen (iN) befindet, und daß die Resultate der Bestimmungen verwendet werden, um die Positionen relativ zu der Bezugsposition einer Vielzahl von Punkten auf der Oberfläche, die abgetastet wird, zu bestimmen.

**3.** Ein Verfahren wie in Anspruch 1 oder Anspruch 2 beansprucht, dadurch gekennzeichnet, daß die relative Bewegung zwischen der abzutastenden Oberfläche und der Halterung mit konstanter Geschwindigkeit stattfindet.

**4.** Ein Verfahren wie in einem der Ansprüche 1 bis 3 beansprucht, dadurch gekennzeichnet, daß die relativen Bewegungen zwischen der Oberflächennachweisvorrichtung (26) und der Oberfläche in beiden der ersten und zweiten Richtungen oszillierende Bewegungen sind.

**5.** Ein Verfahren wie in Anspruch 4 beansprucht, dadurch gekennzeichnet, daß die abzutastende Oberfläche eine zylindrische Oberfläche (60) in oder auf dem Arbeitsstück ist und eine longitudinale Achse (A4) aufweist, und daß der Weg wenigstens eine Richtungskomponente parallel zu der longitudinalen Achse (A4) aufweist.

**6.** Ein Verfahren wie in einem der Ansprüche 1 bis 5 beansprucht, dadurch gekennzeichnet, daß die Halterung ein Abtastkopf (PH) mit wenigstens einer Achse (A2) ist und die transversalen Bewegungen der Oberflächennachweisvorrichtung relativ zu der Oberfläche oszillierende Schwenkbewegungen um die wenigstens eine Achse des Kopfes sind.

**7.** Ein Verfahren wie in einem der Ansprüche 1 bis 5 beansprucht, dadurch gekennzeichnet, daß die Halterung ein Abtastkopf (PH) mit wenigstens einer Achse ist und die transversalen Bewegungen der Oberflächennachweisvorrichtung (26) relativ zu der Oberfläche oszillierende Translationsbewegungen relativ zu der wenigstens einen Achse des Kopfes sind.

8. Ein Verfahren wie in einem der Ansprüche 1 bis 7 beansprucht, dadurch gekennzeichnet, daß die Oberflächennachweisvorrichtung ein Taster (26) mit einer Oberflächenkontaktspitze (27) ist, und daß sich bei ihrer vorbestimmten Beziehung zu der Oberfläche die Oberflächenkontaktspitze (27) in Kontakt mit der Oberfläche befindet.

9. Ein Verfahren wie in einem der Ansprüche 1 bis 7 beansprucht, dadurch gekennzeichnet, daß die Oberflächennachweisvorrichtung eine Analogsonde mit einem Taster (26) mit einer Oberflächenkontaktspitze (27) ist, und daß sich bei ihrer vorbestimmten Beziehung zu der Oberfläche die Oberflächenkontaktspitze in Kontakt mit der Oberfläche befindet.

10. Ein Verfahren wie in einem der Ansprüche 1 bis 7 beansprucht, dadurch gekennzeichnet, daß die Oberflächennachweisvorrichtung eine Berührungsauslösersonde mit einem Taster (26) mit einer Oberflächenkontaktspitze (27) ist, und daß bei ihrer vorbestimmten Beziehung zu der Oberfläche die Oberflächenkontaktspitze in Kontakt mit der Oberfläche an einer Vielzahl von diskreten Punkten darauf gebracht wird.

11. Ein Verfahren wie in Anspruch 9 beansprucht, wenn abhängig von Anspruch 2, dadurch gekennzeichnet, daß die Sonde Transducer aufweist, wodurch die Position des Tasters relativ zu der Sonde bestimmt werden kann, wobei das Verfahren die weiteren Schritte umfaßt, daß aus den Transducern der Analogsonde die Position des Tasters relativ zu der Sonde an jeder der Vielzahl von Stellen bestimmt wird, und daß die Resultate einer derartigen Bestimmung beim der Bestimmen der Positionen von Punkten auf der Oberfläche in dem Koordinatensystem relativ zu der Bezugsposition verwendet werden.

12. Ein Verfahren wie in Anspruch 8 beansprucht, wenn abhängig von Anspruch 2 oder Anspruch 11, dadurch gekennzeichnet, daß der Taster Transducer trägt, wodurch jegliche Deformation des Tasters aufgrund eines Kontakts mit der Oberfläche bestimmt werden kann, wobei das Verfahren ferner die Schritte umfaßt, daß aus den Transducern auf dem Taster das Ausmaß bestimmt wird, in welchem der Taster deformiert wird, und daß die Resultate einer derartigen Bestimmung beim Bestimmen der Positionen von Punkten auf der Oberfläche in dem Koordinatensystem relativ zu der Bezugsposition verwendet werden.

13. Ein Verfahren wie in einem der Ansprüche 1 bis 7 beansprucht, dadurch gekennzeichnet, daß die Oberflächennachweisvorrichtung eine Nicht-Kontaktsonde ist, und daß bei ihrer vorbestimmten Beziehung zu der Oberfläche die Sonde in einem vorbestimmten Abstand von der Oberfläche positioniert ist.

14. Ein Verfahren wie in Anspruch 13 beansprucht, dadurch gekennzeichnet, daß die Sonde eine optische Sonde ist.

15. Ein Abtastkopf (PH) zur Verwendung mit einer Maschine (CMM) beim Abtasten der Oberfläche eines Arbeitsstücks (12) mit Mitteln, die wenigstens eine Achse (A1, A2) definieren, einer Oberflächennachweisvorrichtung (26), die auf dem Kopf (PH) angebracht ist, Antriebsmitteln (M1, M2) zur Erzeugung einer Bewegung der Oberflächennachweisvorrichtung (26) relativ zu der wenigstens einen Achse (A1, A2), und **gekennzeichnet** durch wenigstens einer Masse (202), die von dem Kopf getragen und von den Antriebsmitteln derart gesteuert wird, daß sie den Reaktionskräften entgegenwirkt, die in dem Kopf infolge der Bewegung der Oberflächennachweisvorrichtung erzeugt werden, um die Auswirkungen der Reaktionskräfte auf der Maschine zu reduzieren.

16. Ein Abtastkopf nach Anspruch 15, dadurch gekennzeichnet, daß die Antriebsmittel (M1, M2) Luftlager umfassen.

17. Ein Abtastkopf nach Anspruch 15 oder Anspruch 16, dadurch gekennzeichnet, daß der Kopf (PH) Mittel aufweist, die zwei orthogonale Achsen (A1, A2) definieren, relativ zu denen die Oberflächennachweisvorrichtung (26) bewegbar ist.

18. Ein Abtastkopf nach einem der Ansprüche 15 bis 17, dadurch gekennzeichnet, daß jede Achse (A1, A2) des Kopfes (PH), relativ zu der die Oberflächennachweisvorrichtung bewegbar ist, eine Schwenkachse ist.

19. Ein Abtastkopf nach einem der Ansprüche 15 bis 18,
dadurch gekennzeichnet,
daß der Kopf Positionsbestimmungstransducer (T1, T2) zum Bestimmen der Position der Oberflächennachweisvorrichtung (26) relativ zu jeder Achse des Kopfes umfaßt.

20. Ein Abtastkopf nach einem der Ansprüche 15 bis 19,
dadurch gekennzeichnet,
daß jedes der Antriebsmittel ein Elektromotor (M1, M2) ist.

21. Ein Abtastkopf nach einem der Ansprüche 15 bis 20,
dadurch gekennzeichnet,
daß die Oberflächennachweisvorrichtung ein Taster (26) mit einer Oberflächenkontaktspitze (27) ist.

22. Ein Abtastkopf nach einem der Ansprüche 15 bis 20,
dadurch gekennzeichnet,
daß die Oberflächennachweisvorrichtung eine Berührungsauslösersonde ist, die einen Taster (26) mit einer Oberflächenkontaktspitze (27) aufweist.

23. Ein Abtastkopf nach einem der Ansprüche 15 bis 20,
dadurch gekennzeichnet,
daß die Oberflächennachweisvorrichtung eine Analogsonde ist, die einen Taster mit einer Oberflächenkontaktspitze und Positionswahrnehmungstransducer zum Bestimmen der momentanen Position des Tasters relativ zu dem Sondenkörper umfaßt.

24. Ein Abtastkopf nach einem der Ansprüche 15 bis 20,
dadurch gekennzeichnet,
daß die Oberflächennachweisvorrichtung eine Nicht-Kontaktsonde ist.

25. Ein Abtastkopf nach Anspruch 21 oder Anspruch 23,
dadurch gekennzeichnet,
daß der Taster (26) Transducer trägt, wodurch jegliche Deformation des Tasters aufgrund eines Kontakts mit der Oberfläche bestimmt werden kann.

26. Ein Abtastkopf wie in Anspruch 18 beansprucht,
dadurch gekennzeichnet,
daß die Masse (202), die von dem Kopf getragen wird, rotationsmäßig beschleunigt wird, um eine Reaktion zu erzeugen, die gleich und entgegengesetzt zu den Kräften ist.

27. Ein Abtastkopf wie in Anspruch 26 beansprucht,
dadurch gekennzeichnet,
daß wenigstens eines der Antriebsmittel (M1, M2) in dem Kopf ein Elektromotor ist, dessen Teile (200, 202) zur relativen Rotation in entgegengesetzten Richtungen angebracht sind.

28. Vorrichtung zum Abtasten der Oberfläche eines Arbeitsstücks,
**gekennzeichnet** durch
eine Maschine (CMM), die einen Abtastkopf (PH) gemäß einem der Ansprüche 15 bis 27 zur Bewegung in einem dreidimensionalen Koordinatensystem trägt, und worin die Maschine Positionsbestimmungstransducer (Tx, Ty, Tz) zum Bestimmen der momentanen Position des Kopfes innerhalb des Systems umfaßt, wobei die Vorrichtung ferner Steuerungsmittel (50) zum Errichten einer vorbestimmten Beziehung zwischen der Oberflächennachweisvorrichtung (26) und der Oberfläche, die abgetastet wird, umfaßt.

29. Vorrichtung wie in Anspruch 28 beansprucht,
ferner gekennzeichnet durch
Datensammelmittel (50), die von den Steuerungsmitteln (50) gesteuert werden, um Positionsdaten von den Positionsbestimmungstransducern auf der Maschine zu sammeln.

30. Vorrichtung nach Anspruch 29, wenn abhängig von Anspruch 19,
dadurch gekennzeichnet,
daß das Datensammelmittel (50) zusätzlich Positionsdaten von den Positionsbestimmungstransducern (T1, T2) in dem Kopf empfängt.

31. Vorrichtung nach Anspruch 29, wenn abhängig von Anspruch 23,
dadurch gekennzeichnet,
daß das Datensammelmittel (50) zusätzlich Positionsdaten von den Positionsbestimmungstransducern in der Sonde empfängt.

32. Vorrichtung nach Anspruch 29, wenn abhängig von Anspruch 25,
dadurch gekennzeichnet,
daß das Datensammelmittel zusätzlich Daten von den Transducern empfängt, die von dem Taster (26) getragen werden.

33. Vorrichtung nach Anspruch 28, wenn abhängig von Anspruch 20,
dadurch gekennzeichnet,
daß die Elektromotoren (M1, M2) entweder in einem Positionierungsmodus oder einem Modus konstanten Drehmoments betreibbar sind, und daß Steuerungsmittel (50) vorgesehen sind, um selektiv die Motoren zwischen den verschiedenen Betriebsmoden zu schalten.

## Revendications

1. Une méthode d'analyse de la surface d'une pièce faisant appel à un dispositif de détection de surface (26) monté sur un support (PH) sur une machine à mesurer tridimensionnelle (MMT), le support comportant un actionneur (M1, M2) produisant le mouvement du dispositif de détection de surface avec deux degrés de liberté de mouvement par rapport au support, la méthode comprenant les étapes suivantes :

   commande de la machine (MMT) pour produire un mouvement relatif entre le support (PH) et la surface de la pièce suivant un parcours (LO, 42A) adjacent à la surface de la pièce et dans lequel le dispositif de détection de surface (26) passe sur la surface de la pièce et caractérisé par les étapes suivantes de :
   commande de l'actionneur (M1, M2)

   i) pour produire le mouvement du dispositif de détection de surface (26) relatif au support (PH) dans une première direction vers ou à l'opposé de la surface de la pièce et dans un rapport spatial prédéterminé et

   ii) pour produire, simultanément au mouvement relatif entre le support et la surface de la pièce, un mouvement relatif oscillant entre le dispositif de détection de surface et la surface dans la seconde direction transversale à la direction du parcours instantané (LO, 42A) tout en maintenant ledit rapport spatial prédéterminé entre le dispositif de détection de surface et la surface de la pièce.

2. Une méthode conforme à celle de la revendication 1 et comprenant en outre les étapes suivantes:

   détermination des positions du support (PH) à des emplacements divers (iN) par rapport à une origine (Dx, Dy, Dz) ;

   détermination des positions instantanées du dispositif de détection de surface (26) par rapport au support (PH) quand le support est à chacun desdits emplacements (iN) et

   utilisation de ces résultats pour déterminer les positions relatives à ladite position d'origine de divers points sur la surface analysée.

3. Une méthode conforme à la revendication 1 ou la revendication 2 caractérisée par le fait que le mouvement relatif entre la surface à analyser et le support a lieu à une vitesse constante.

4. Une méthode conforme à l'une quelconque des revendications 1 à 3 caractérisée par le fait que les mouvements relatifs entre le dispositif de détection de surface (26) et la surface dans les deux directions, première et seconde, sont des mouvements oscillants.

5. Une méthode conforme à la revendication 4 caractérisée par le fait que la surface à analyser est une surface cylindrique (60) dans ou sur la pièce et qui a un axe longitudinal (A4) et le parcours a au moins un composant de direction parallèle audit axe longitudinal (A4).

6. Une méthode conforme à l'une quelconque des revendications 1 à 5 caractérisée par le fait que le support est une tête de balayage (PH) ayant au moins un axe (A2) et les mouvements transversaux du dispositif de détection de surface relatifs à la surface sont des pivotements oscillants autour d'un axe au moins de la tête.

7. Une méthode conforme à l'une quelconque des revendications 1 à 5 caractérisée par le fait que le support est une tête de balayage (PH) ayant au moins un axe et les mouvements transversaux du dispositif de détection de surface (26) relatifs à la surface sont des mouvements oscillants de translation relatifs à au moins un axe de la tête.

8. Une méthode conforme à l'une quelconque des revendications 1 à 7 caractérisée par le fait que le dispositif de détection de surface est un stylet (26) ayant une touche de contact avec la surface (27) et dont le rapport prédéterminé avec la surface est un rapport dans lequel cette touche (27) est en contact avec la surface.

9. Une méthode conforme à l'une quelconque des revendications 1 à 7 caractérisée par le fait que le dispositif de détection de surface est un capteur analogique ayant un stylet (26) avec une touche (27) dont le rapport prédéterminé avec la surface est un rapport dans lequel cette touche est en contact avec la surface.

10. Une méthode conforme à l'une quelconque des revendications 1 à 7 caractérisée par le fait que le dispositif de détection de surface est un capteur à déclenchement par contact ayant un stylet (26) avec une touche (27) dont le rapport prédéterminé avec la surface est un rapport dans lequel cette touche est mise en contact avec la surface à plusieurs points discrets de cette surface.

11. Une méthode conforme à la revendication 9 et dépendante de la revendication 2 caractérisée par le fait que le capteur comporte des transducteurs qui permettent de déterminer la position du stylet par rapport au capteur, la méthode comprenant les autres étapes suivantes :

détermination à partir des transducteurs du capteur analogique de la position du stylet par rapport au capteur à chacun de l'un desdits emplacements divers et

utilisation des résultats de cette détermination pour prendre des points sur la surface dans lesdites coordonnées par rapport à la position d'origine.

12. Une méthode conforme à la revendication 8 et dépendante de la revendication 2 ou de la revendication 11 caractérisée par le fait que le stylet porte des transducteurs qui permettent de déterminer toute déformation du stylet due au contact avec la surface, la méthode comprenant aussi les étapes suivantes :

détermination à partir des transducteurs sur le stylet de la grandeur de la déformation du stylet et

utilisation des résultats de cette détermination pour obtenir les positions des points sur la surface dans lesdites coordonnées par rapport à ladite position d'origine.

13. Une méthode conforme à l'une quelconque des revendications 1 à 7 caractérisée par le fait que le dispositif de détection de surface est un capteur sans contact dont le rapport prédéterminé avec la surface est un rapport dans lequel le capteur est positionné à une distance prédéterminée de la surface.

14. Une méthode conforme à la revendication 13 caractérisée par le fait que le capteur est un capteur optique.

15. Une tête de balayage (PH) à utiliser sur une machine (CMM) pour le balayage de la surface d'une pièce (12) comprenant :

le moyen de définir au moins un axe (A1, A2),

un dispositif de détection de surface (26) monté sur la tête (PH),

un actionneur (M1, M2) pour la production d'un mouvement du dispositif de détection de surface (26) par rapport à au moins un axe (A1, A2) et caractérisé par :

au moins une masse (202) portée par la tête et qui est entraînée par l'actionneur de manière à opposer les forces de réaction produites dans la tête du fait dudit mouvement du dispositif de détection de surface pour réduire les effets desdites forces de réaction sur la machine.

16. Une tête de balayage conforme à la revendication 15 caractérisée par le fait que l'actionneur (M1, M2) comprend des paliers d'air.

17. Une tête de balayage conforme à la revendication 15 ou 16 caractérisée par le fait que la tête (PH) a le moyen de définir deux axes orthogonaux (A1, A2) par rapport auxquels le dispositif de détection de surface (26) est mobile.

18. Une tête de balayage suivant laquelle l'une quelconque des revendications 15 à 17 caractérisées par le fait que chaque axe (A1, A2) de la tête (PH) par rapport auquel le dispositif de détection de surface est mobile est un axe pivotant.

19. Une tête de balayage conforme à l'une quelconque des revendications 15 à 18 caractérisée par le fait que la tête comporte des transducteurs de définition de position (T1, T2) pour déterminer la position du dispositif de détection de surface (26) par rapport à chaque axe de la tête.

20. Une tête de balayage conforme à l'une quelconque des revendications 15 à 19 caractérisée par le fait que chacun des actionneurs est un moteur électrique (M1, M2).

21. Une tête de balayage conforme à l'une quelconque des revendications 15 à 20 caractérisée par le fait que le dispositif de détection de surface est un stylet (26) ayant une touche de contact avec la surface (27).

22. Une tête de balayage conforme à l'une quelconque des revendications 15 à 20 caractérisée par le fait que le dispositif de détection de surface est un capteur à déclenchement par contact comportant un stylet (26) ayant une touche de contact avec la surface (27).

23. Une tête de balayage conforme à l'une quelconque des revendications 15 à 20 caractérisée par le fait que le dispositif de détection de surface est un capteur analogique muni d'un stylet (26) ayant un stylet muni d'une touche et comportant des transducteurs de détection de position pour déterminer la position instantanée du stylet par rapport au corps du capteur.

24. Une tête de balayage conforme à l'une quelconque des revendications 15 à 20 caractérisée par le fait que le dispositif de détection de surface est un capteur sans contact.

25. Une tête de balayage conforme à la revendication 21 ou 23 caractérisée par le fait que le stylet (26) porte des transducteurs par lesquels il est possible de déterminer toute déformation du stylet du fait du contact avec la surface.

26. Une tête de balayage conforme à la revendication 18 caractérisée par le fait que la masse (202) portée par la tête est accélérée en rotation pour produire une réaction égale et opposée auxdites forces.

27. Une tête de balayage conforme à la revendication 26 caractérisée par le fait qu'au moins un des actionneurs (M1, M2) dans la tête est un moteur électrique dont les parties (200,202) sont montées pour une rotation relative dans des directions opposées.

28. Appareil de balayage de la surface d'une pièce caractérisé par une machine (CMM) soutenant une tête de balayage (PH) conforme à l'une quelconque des revendications 15 à 27 pour le mouvement dans un système de coordonnées à trois dimensions, la machine comprenant des transducteurs de définition de position (Tx, Ty, Tz) pour déterminer la position instantanée de la tête dans ledit système, l'appareil comprenant aussi des moyens de commande (50) pour établir un rapport prédéterminé entre le dispositif de détection de surface (26) et la surface balayée.

29. Appareil conforme à la revendication 28 et caractérisé aussi par des moyens d'acquisition de données (50) gérés par le moyen de commande (50) pour l'acquisition de données de position à partir des transducteurs de détermination de position sur la machine.

30. Appareil conforme à la revendication 29 et dépendant de la revendication 19 caractérisé par le fait que les moyens d'acquisition de données (50) reçoivent également des données de position provenant des transducteurs de détermination de position (T1, T2) dans la tête.

31. Appareil conforme à la revendication 29 et dépendant de la revendication 23 caractérisé par le fait que les moyens d'acquisition de données (50) reçoivent également des données de position provenant des transducteurs de détermination de position dans le capteur.

32. Appareil conforme à la revendication 29 et dépendant de la revendication 25 caractérisé par le fait que les moyens d'acquisition de données reçoivent également des données de position provenant des transducteurs portés par le stylet (26).

33. Appareil conforme à la revendication 28 et dépendant de la revendication 20 caractérisé par le fait que les moteurs électriques (M1, M2) peuvent fonctionner soit en mode de positionnement soit en mode à couple constant et des moyens de commande (50) sont fournis pour faire commuter sélectivement les moteurs entre les divers modes de fonctionnement.

## Fig.1.

## Fig.3.

Fig.2.

# Fig.4.

# Fig.5.

# Fig.6.

# Fig.7.

# Fig.8.

# Fig. 9.

Fig.10.

Fig.11.

VOLTAGE

Fig.12.

26

Fig.13.

Fig.14.

Fig.15.

Fig.16.

Fig.17.

Fig.18.

Fig.19.